# EUROPÄISCHE PATENTSCHRIFT

(11) **EP 3 028 024 B1**
(45) Veröffentlichungstag und Bekanntmachung des Hinweises auf die Patenterteilung: **03.06.2020**
(21) Anmeldenummer: 14747353.2
(22) Anmeldetag: 30.07.2014
(51) Int. Cl.: G01M 3/00, G01M 3/28, G01L 19/08

(54) **PRÜFLECKVORRICHTUNG MIT INTEGRIERTEM DRUCKSENSOR**
TEST LEAK DEVICE HAVING AN INTEGRATED PRESSURE SENSOR
DISPOSITIF À FUITE DE CONTRÔLE MUNI D'UN CAPTEUR DE PRESSION INTÉGRÉ

(30) Priorität: 02.08.2013 DE 102013215278
(43) Veröffentlichungstag der Anmeldung: 08.06.2016
(73) Patentinhaber: Inficon GmbH, 50968 Köln (DE)
(72) Erfinder: DECKER, Silvio, 50999 Köln (DE)
(74) Vertreter: dompatent von Kreisler Selting Werner - Partnerschaft von Patent- und Rechtsanwälten mbB
(86) Internationale Anmeldenummer: PCT/EP2014/066391
(87) Internationale Veröffentlichungsnummer: WO 2015/014899

(56) Entgegenhaltungen:
- FR-A1- 2 749 079
- JP-A- H 055 671
- US-A- 4 899 574
- US-A1- 2007 000 310
- US-A1- 2010 326 165
- US-B1- 8 448 498

## Beschreibung

Die Erfindung betrifft eine Prüfleckvorrichtung zum Kalibrieren oder Testen von Lecksuchgeräten.

Prüfleckvorrichtungen weisen einen Druckgasbehälter auf, der über einen Einlass mit Prüfgas befüllt und druckbeaufschlagt wird. Der Druckgasbehälter ist mit einem Leck mit einer vorgegebenen Leckrate versehen. Das durch das Prüfleck austretende Prüfgas strömt mit der vorgegebenen Leckrate aus. Das ausströmende Prüfgas kann mit einem Lecksuchgerät zur Überprüfung dessen Funktionsgenauigkeit oder zu dessen Kalibrierung gemessen werden.

Bei einem Prüfleck ist die vorgegebene Leckrate von entscheidender Bedeutung und darf über der Zeit nicht variieren. Die Leckrate wird von dem Druck in dem Druckgasbehälter, von der Gastemperatur und dem Volumen des Druckgasbehälters beeinflusst. Bislang wurden Prüflecks mit hohem Druck beaufschlagt und das Volumen des Druckgasbehälters dabei so groß gewählt, dass die Leckratenänderung aufgrund des Druckverlustes gering ist.

Es ist auch bekannt, die Temperatur über den Lebenszyklus des Testlecks aufzuzeichnen und die Leckrate anhand theoretischer Annahmen über den Druckverlust im Prüfleck zu berechnen. Eine direkte Messung des Drucks war bislang nachteilig, weil die eingesetzten Druckmessinstrumente vergleichsweise groß und teuer sind und eine Kabelverbindung zur Datenübertragung und zur Stromversorgung benötigen. Eine Berechnung der aktuellen Leckrate über theoretische Annahmen des Druckverlustes auf Basis der gemessenen Temperatur birgt die Gefahr, dass große Temperaturschwankungen oder unvorhergesehene Druckverluste zu großen Fehlern führen. Fehler, die aus groben Undichtigkeiten am Prüfleck resultieren, lassen sich mit dieser Methode nicht aufdecken.

JP H05 5671 A beschreibt eine Anordnung zum Kalibrieren eines Leckdetektors, mit einem Drucktank, einem mit dem Drucktank verbundenen Drucksensor und einer mit dem Drucktank verbundenen Kapillare.

US 2010/0326165 A1 beschreibt eine Testvorrichtung für einen Gasdetektor, wobei die Testvorrichtung und der Gasdetektor durch eine drahtlose Datenverbindung kommunizieren.

US 8,448,498 B1 und US 4,899,574 A beschreiben Leckdetektoren zur Detektion von Gaslecks.

FR 2 749 079 beschreibt ein Gerät zur Erzeugung eines kalibrierten Lecks.

US2007/0000310 A1 beschreibt ein Leckdetektionssystem mit entfernter drahtlosen Bedieneinheit.

Der Erfindung liegt die Aufgabe zugrunde, eine verbesserte Überwachung der Leckrate einer Prüfleckvorrichtung zu schaffen.

Die erfindungsgemäße Prüfleckvorrichtung ist definiert durch Anspruch 1.

Die Prüfleckvorrichtung weist einen integrierten, den Druck in dem Druckgasbehälter überwachenden Drucksensor auf und ist zum drahtlosen Senden der gemessenen Druckwerte an einen Empfänger ausgebildet. Dadurch ist es möglich, auf eine komplizierte Berechnung der Leckrate zum Beispiel auf Basis von gemessenen Temperaturen zu verzichten, und die jeweils aktuelle Leckrate unabhängig von dem Füllzustand des Druckgasbehälters zu bestimmen. Die Druckmesswerte können drahtlos ausgelesen werden, so dass das Prüfleck mobil zum Beispiel zum Kalibrieren mehrerer Geräte an verschiedenen Orten einsetzbar ist. Der Druck in dem Druckgasbehälter kann überwacht werden und ein Druckverlust und somit fehlerhafte Kalibriervorgänge erkannt werden.

Der Drucksensor ist vorzugsweise am Einlass, zum Beispiel an einem Einlassventil angebracht. Der an diesem Ventil gemessene Druck wird drahtlos an einen räumlich entfernten Empfänger übertragen, der zum drahtlosen Empfangen der Druckmesswerte ausgebildet ist. Der Empfänger kann Teil der Prüfleckvorrichtung sein und darüber hinaus auch zum funkgesteuerten Starten des Kalibriervorganges oder zum Betätigen des Einlassventils ausgebildet sein. Hierzu ist die Prüfleckvorrichtung vorteilhafterweise auch zum Empfangen von Signalen von dem Empfänger ausgebildet.

Von besonderem Vorteil ist es, wenn die Prüfleckvorrichtung einen Speicher, zum Beispiel elektrisch oder magnetisch, aufweist, in dem die Leckrate des Prüflecks hinterlegt ist. Die Prüfleckvorrichtung sollte dann dazu ausgebildet sein, die gespeicherte Leckrate an den Empfänger drahtlos zu übermitteln, zum Beispiel per Funk mit Hilfe der RFID-Technik. Bei dem Speicher kann es sich in diesem Fall um einen RFID-Chip handeln.

Vorzugsweise ist der Drucksensor mit einer den Sensor speisenden Batterie versehen, deren Lebensdauer größer als die Nutzungsdauer für das Prüfleck ist.

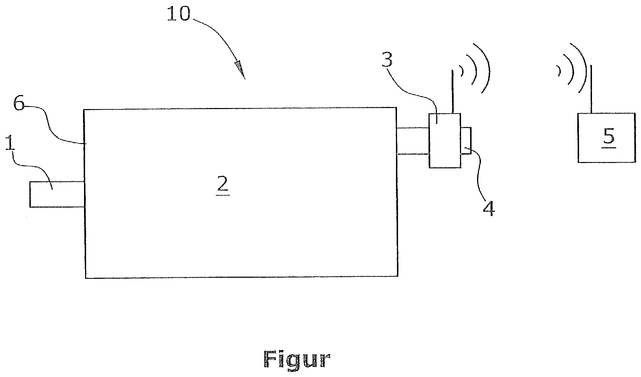

Im Folgenden wird anhand der Figur ein Ausführungsbeispiel der Erfindung näher erläutert. Die Figur zeigt eine schematische Darstellung der Prüfleckvorrichtung.

Die Prüfleckvorrichtung 10 weist einen Druckgasbehälter 2 auf, in dessen Wand 6 das Prüfleck 1 in Form eines Kapillarlecks oder eines Permeationslecks mit konstanter, vorgegebener Leckrate ausgebildet ist. Auf der dem Leck 1 gegenüberliegenden Seite ist der Druckgasbehälter 2 mit einem Einlass 4 in Form eines Befüllventils versehen. Durch den Einlass 4 wird der Druckgasbehälter 2 mit druckbeaufschlagtem Prüfgas befüllt.

Der Einlass 4 ist mit einem Drucksensor 3 versehen, der den Gasdruck innerhalb des Druckgasbehälters 2 misst und drahtlos an einen Empfänger 5 übermittelt. Der Drucksensor 3 ist mit einer Batterie versehen, deren Lebensdauer die Nutzungsdauer der Prüfleckvorrichtung 10 übersteigt. Die Messwerte des Drucksensors 3 werden permanent an den Empfänger 5 ausgesendet, so dass eine dauerhafte, räumlich unabhängige Überwachung des Drucks in dem Druckgasbehälter 2 ermöglicht ist, um Abweichungen von der vorgegebenen Leckrate möglichst frühzeitig zu erkenen.

Die Prüfleckvorrichtung 10 ist mit einem in der Figur nicht dargestellten Speicher in Form eines RFID-Chips versehen, in dem der Leckratenwert für das Leck 1 gespeichert ist. Der Empfänger 5 ist in der Lage, auch den gespeicherten Leckratenwert auszulesen. Auf diese Weise können in nur einem Gerät - nämlich dem Empfänger 5 - Abweichungen von der Leckrate räumlich unabhängig und zuverlässig erkannt werden.

## Patentansprüche

1. Kombination aus einer zum Kalibrieren oder Testen von Lecksuchgeräten ausgebildeten Prüfleckvorrichtung (10 und einem räumlich von der Prüfleckvorrichtung entfernt angeordneten Empfänger (5), wobei die Prüfleckvorrichtung (10) einen Druckgasbehälter (2) mit einem Einlass (4) zum Befüllen mit einem Prüfgas und mit einem Leck (1) mit einer vorgegeben Leckrate aufweist,
**dadurch gekennzeichnet,**
**dass** die Prüfleckvorrichtung einen integrierten, an dem Einlass (4) angeordneten, den Druck in dem Druckgasbehälter (2) überwachenden Drucksensor (3) aufweist und zum drahtlosen Senden der gemessenen Druckwerte an den Empfänger (5) ausgebildet ist, wobei der Empfänger zum drahtlosen Empfangen der Druckmesswerte ausgebildet ist, und
**dass** die Prüfleckvorrichtung (10) einen drahtlos auslesbaren Speicher aufweist, in dem die Leckrate des Lecks (1) gespeichert ist, und zum drahtlosen Senden der gespeicherten Daten an den Empfänger (5) ausgebildet ist.

2. Kombination nach Anspruch 1, **dadurch gekennzeichnet, dass** der Drucksensor zum Senden drahtloser Signale ausgebildet ist und eine durch drahtlos übertragene Befehle aktivierbare Steuereinrichtung zum Öffnen und Schließen des Einlasses (4) aufweist.

3. Kombination nach Anspruch 1 oder 2, **dadurch gekennzeichnet, dass** das Leck (1) ein Kapillarleck oder ein Permeationsleck in einer Wand (6) des Druckgasbehälters (2) ist.

4. Kombination nach einem der vorhergehenden Ansprüche, **dadurch gekennzeichnet, dass** der Speicher ein RFID-Chip ist, wobei der Empfänger (5) auch zum Empfangen der RFID-Daten ausgebildet ist.

## Claims

1. A combination of a test leak device (10) configured for calibrating or testing leak detection apparatuses and a receiver (5) spaced apart from the test leak device (10), wherein the test leak device (10) comprises a compressed gas container (2) with an inlet (4) for filling with a test gas and with a leak (1) having a predefined leakage rate,
**characterized in**
**that** the test leak device comprises an integrated pressure sensor (3) arranged at the inlet (4) and monitoring the pressure in the compressed gas container (2) and being configured for wireless transmission of the measured pressure values to the receiver (5), wherein the receiver is configured for wireless reception of the pressure sensor values, and
**that** the test leak device (10) comprises a memory adapted to be read wirelessly, in which memory the leakage rate of the leak (1) is stored, and is configured for wireless transmission of the stored data to the receiver (5).

2. The combination of claim 1, **characterized in that** the pressure sensor is configured for the transmission of wireless signals and comprises a control device for opening and closing the inlet (4), which control device is activatable via wirelessly transmitted commands.

3. The combination of claim 1 or 2, **characterized in that** the leak (1) is a capillary leak or a permeation leak in a wall (6) of the compressed gas container (2).

4. The combination of one of the preceding claims, **characterized in that** the memory is a RFIOD chip, wherein the receiver (5) also being configured for reception of the RFID data.

## Revendications

1. Combinaison d'un dispositif de contrôle de fuite (10) réalisé pour étalonner ou tester des appareils de détection des fuites et d'un récepteur (5) disposé éloigné dans l'espace du dispositif de contrôle de fuite (10), dans laquelle le dispositif de contrôle de fuite (10) comporte un conteneur de gaz pressurisé (2) doté d'une entrée (4) permettant le remplissage avec un gaz de contrôle et d'une fuite (1) possédant un taux de fuite prédéfini,
**caractérisée en ce que**
le dispositif de contrôle de fuite comporte un capteur de pression (3) intégré, agencé à l'entrée (4) et surveillant la pression dans le conteneur de gaz pressurisé (2), et est réalisé pour émettre sans fil les valeurs de pression mesurées au récepteur (5), dans laquelle le récepteur est réalisé pour recevoir sans fil les valeurs de pression mesurées, et **en ce que**
le dispositif de contrôle de fuite (10) comporte une mémoire lisible sans fil, le taux de fuite de la fuite (1) étant enregistré dans celle-ci, et est réalisé pour émettre sans fil les données enregistrées au récepteur (5).

2. Combinaison selon la revendication 1, **caractérisée en ce que** le capteur de pression est réalisé pour émettre des signaux sans fil et comporte un moyen de commande activable par ordres transmis sans fil permettant l'ouverture et la fermeture de l'entrée (4).

3. Combinaison selon la revendication 1 ou 2, **caractérisée en ce que** la fuite (1) est une fuite capillaire ou une fuite de perméation dans une paroi (6) du conteneur de gaz pressurisé (2).

4. Combinaison selon l'une des revendications précédentes, **caractérisée en ce que** la mémoire est une puce RFID, dans laquelle le récepteur (5) est également réalisé pour recevoir les données RFID.
